Europäisches Patentamt

European Patent Office

Office européen des brevets

(11) Veröffentlichungsnummer: **0 122 530**
**B1**

(12) **EUROPÄISCHE PATENTSCHRIFT**

(45) Veröffentlichungstag der Patentschrift: **06.02.91**

(51) Int. Cl.⁵: **B 60 C 9/18, B 60 C 9/20**

(21) Anmeldenummer: **84103583.5**

(22) Anmeldetag: **31.03.84**

(54) Fahrzeugluftreifen.

(30) Priorität: **14.04.83 DE 3313535**

(43) Veröffentlichungstag der Anmeldung:
**24.10.84 Patentblatt 84/43**

(45) Bekanntmachung des Hinweises auf die
Patenterteilung:
**06.02.91 Patentblatt 91/06**

(84) Benannte Vertragsstaaten:
**AT BE CH DE FR GB IT LI LU NL SE**

(56) Entgegenhaltungen:
EP-A-0 072 500
FR-A-2 278 508
FR-A-2 280 519
FR-A-2 303 675
GB-A-2 118 910
US-A- 30 549

(73) Patentinhaber: **Continental Aktiengesellschaft
Königsworther Platz 1
D-3000 Hannover 1 (DE)**

(72) Erfinder: **Rohde, Dieter, Dipl.-Ing.
Windmühlenstrasse 4
D-3160 Lehrte (DE)**

Courier Press, Leamington Spa, England.

**Beschreibung**

Die Erfindung betrifft einen Fahrzeugluftreifen mie einem zugfesten Gürtel zwischen Laufstreifen und der Radialkarkasse und mit einer zu beiden Seiten seines Laufstreifens befindlichen schulterartigen, mit der Fahrbahn nicht in Berührung kommenden, durch eine Stufung gebildeten Verbreiterung, von der aus sich die Reifenseitenwände nach unten bzw. radial nach innen zu den Reifenwülsten erstrecken und wobei der Gürtel eine größere Breite hat als die Lauffläche und sich somit seine Ränder in den Bereich der Verbreiterung erstrecken.

Es versteht sich, daß ein vergleichsweise breiter Gürtel zu einer im Vergleich zu einem Gürtel größeren Verfestigung der Laufstreifenzone führt. Eine solche Verfestigung und Stabilisierung der Laufstreifenzone kann zu einer Verringerung des Rollwiderstandes führen. Ein Reifen gemäß dem Oberbegriff des Anspruchs 1 ist z.B. durch die DE—A—2 436 115 bekannt. Nach diesem bekannten Vorschlag ist eine so große Gürtelbreite gewählt, daß die Reifenseitenwände mit ihrer Ausbauchung die Gürtelränder zur Seite hin nur geringfügig überragen. Unter diesen Voraussetzungen sind im Hinblick auf die Krümmung der Karkasse besondere, vergleichsweise Gummistreifen erforderlich, um den Gürtel die gewünschte etwa zylindrische Gestalt zu vermitteln. Hierdurch wird zwar die Laufflächenzone verfestigt, jedoch ergeben sich übermäßige Beanspruchungen an den Gürtelkanten und zudem Nachteile in bezug auf eine dynamisch weiche Einfederung des Reifenkörpers in radialer Richtung.

Aufgrund der Erfindung sollen diese Nachteile vermieden werden. Es soll also ein Reifen mit geringem Rollwiderstand geschaffen werden, der ein gleichmäßiges Abnutzungsbild aufweist aber dennoch eine hohe Dauerstandfestigkeit auch im Bereich seiner Gürtelränder un ferner eine gute dynamische Weichheit aufweist.

Zur Lösung dieser Aufgabe ist erfindungsgemäß der gattungsgemäße, vorzugsweise als Riesen- bzw. LKW-Reifen vorgesehene, Luftreifen so gestaltet, daß die Gürtelränder die senkrechten Stufenflächen um ein erstes Maß überragen, das etwa 0,25 bis 0,4 eines zweiten Maßes beträgt, um das die Reifenseitenwand seitlich außen die vorerwähnte senkrechte Stufenfläche überragt. Dieses erste Maß soll vorzugsweise etwa 0,3 des zweiten Maßes sein.

Der Erfindung liegt demgemäß der Gedanke zugrunde, eine so große Gürtelbreite zu benutzen, daß die gewünschte Versteifung der Laufflächenzone erreicht wird, um so eine möglichst geringen Rollwiderstand zu erreichen, daß aber gleichzeitig der Reifen eine solche Breite erhält und damit eine solche Auswölbung seiner Setienwände, daß der Reifen dynamisch weich wird und zugleich es nur einer vergleichsweise schmalen Unterstützungsfläche unter den Gürtelrändern in Form von etwa dreieckförmigen Gummiprofilen bedarf.

Ein so ausgeführter Luftreifen zeigt in bezug auf das Verformungsverhalten eine weitgehende Entkoppelung der Laufflächenzone gegenüber den bei Radialreifen hochbiegsamen Seitenwänden. Gleichzeitig werden jedoch die Gürtelkanten durch die stark ausbauchenden Seitenwände entlastet und alle zur Verfestigung der Laufstreifenzone vorgesehenen Maßnahmen führen nicht zu einer Verminderung der Verformbarkeit der Reifenseitenwände.

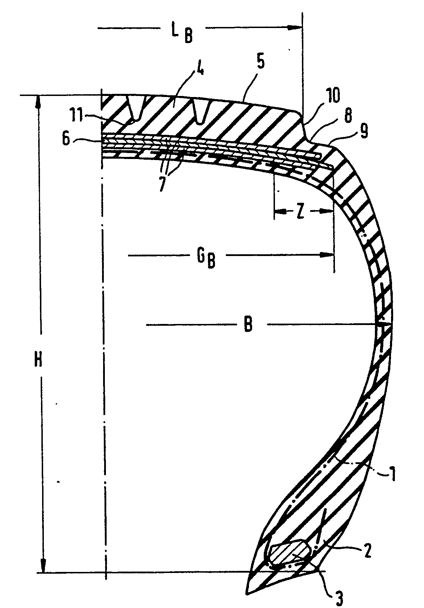

Weitere Einzelheiten der Erfindung werden anhand der Zeichnung erläutert, in der ein Ausführungsbeispiel dargestellt ist.

Die Abb. zeigt einen radialen Teilschnitt durch einen Fahrzeugluftreifen für einen Lastkraftwagen.

Der im wesentlichen aus Gummi oder gummiähnlichen Stoffen bestehende Reifenkörper weist eine sogenannte Radialkarkasse auf, bei der in bekannter Weise die Festigkeitsträger in zum Reifen radialen Ebenen angeordnet sind. Die Ränder der Karkasse 1 sind in den Reifenwülsten 2 durch Umschlingen der Wulstkerne 3 verankert. Der Laufstreifen ist mit 4 bezeichnet, seine Lauffläche mit 5.

Zwischen dem Laufstreifen 4 und der Karkasse 1 befindet sich ein in Reifenumfangsrichtung zugfester Gürtel 6 aus drei übereinanderliegenden Cordlagen 7, deren Festigkeitsträger in jeder Lage parallel zueinander verlaufen, deren Festigkeitsträger aber in bezug auf die benachbarte Lage mit der Reifenumfangsrichtung abweichende Winkel einschließen.

Es versteht sich, daß alle Teile des Reifens festhaftend anvulkanisiert sind durch den aus Gummi oder dergl. bestehenden Reifenkörper.

Nach dem Ausführungsbeispiel ist das Höhen-/Breiten-Verhältnis H zu B kleiner als 85%.

Charakteristisch an dem vorgenannten Reifen ist eine Stufe 8 zu beiden Seiten des Reifenkörpers im Schulterbereich. Diese Stufe weist eine im wesentlichen zylindrische, etwa parallel zur Lauffläche 5 verlaufende eine Verbreiterung darstellende Grundfläche 9 und eine etwa senkrechte Stufenfläche 10 auf, die die Breite des Laufstreifens 4 $L_B$ bestimmt.

Der Gürtel 6 ist im wesentlichen zylindrisch gestaltet, ebenso in etwa die Grundfläche 9, die ihrerseits auf einem Durchmesser liegt, der kleiner ist als der Durchmesser der Laufstreifenprofilierung auf dem Grunde seiner Profileinschnitte bei 11, und zwar in der Weise, daß auch bei abgenutztem Reifenprofil die Grundfläche 9 unter normalen Fahrbedingungen nicht mit der Fahrbahn in Berührung kommt.

Die Gürtelbreite ist mit $G_B$ und die etwa auf halber Höhe des Reifenquerschnitts gemessene größte Breite des Reifens mit B bezeichnet.

Nach der Zeichnung ragt zwar der Gürtelrand des Gürtels 6 in den Bereich der Grundfläche 9, jedoch ist die Breite B so gewählt, daß sich die Proportion

$$\frac{G_B - L_B}{B - L_B} = 0{,}25 \div 0{,}4,$$

vorzugsweise aber einen Wert von 0,3 ergibt. Dies bedeutet, daß die Zone Z, in der der Gürtelrand im Winkel zur Karkasse 1 verläuft, vergleichsweise klein ist und vorzugsweise nur etwa das Doppelte des Maßes beträgt, um das der Gürtelrand gegenüber der senkrechten Stufenfläche 10 vorspringt. Damit ist ein entsprechend kleiner Stützgummi in Form der üblichen Unterleggummistreifen ausreichend. Zudem ergibt sich eine vergleichsweise große Ausbauchung durch die Breite B des Reifens.

**Patentansprüche**

1. Fahrzeugluftreifen mit einem zugfesten Gürtel (6) zwischen dem Laufstreifen (4) und der Radialkarkasse (1) und mit zu beiden Seiten des Laufstreifens (4) befindlichen schulterartigen, durch je eine Stufe (8) gebildeten, mit der Fahrbahn nicht in Berührung kommenden, im wesentlichen zylindrischen Verbreiterungen (9), von denen aus sich die Reifenseitenwände radial nach innen zu den Reifenwülsten (2) hin erstrecken und wobei sich ferner die Ränder des Gürtels (6) im Bereich der Verbreiterung (9) befinden, dadurch gekennzeichnet, daß die Ränder des Gürtles (6) die senkrecht zur Reifenachse verlaufenden Stufenflächen (10) der Stufe (8) um ein erstes Maß

$$\frac{G_B - L_B}{2}$$

zur Seite hin überragen, das etwa 25 bis 40% eines zweiten Maßes

$$\frac{(B - L_B)}{2}$$

beträgt, um das die ausgebauchten Reifenseitenwände an ihrer breitesten Stelle (Reifenbreite B) die senkrechte Stufenfläche (10) überragen.

2. Fahrzeugluftreifen nach Anspruch 1, dadurch gekennzeichnet, daß das erste Maß etwa 0,3 des zweiten Maßes beträgt.

3. Fahrzeugluftreifen nach Anspruch 1, dadurch gekennzeichnet, daß die Ränder des Gürtels (6) eine im Winkel zur Karkasse verlaufende Zone (Z) aufweisen, die etwa doppelt so groß ist wie das erste Maß, um das die Ränder des Gürtels die senkrechte Stufenfläche (10) seitlich überragen.

4. Fahrzeugluftreifen nach Anspruch 1, dadurch gekennzeichnet, daß die Laufflächenbreite (L_B) etwa 65 bis 75% der Reifenbreite (B) beträgt.

**Revendications**

1. Pneumatique pour véhicules, avec une ceinture résistante à la traction (6) entre la bande de roulement (4) et la carcasse radiale (1), et avec des élargissements (9) sensiblement cylindriques, semblables à des épaulements, qui se trouvent des deux côtés de la bande de roulement (4), qui sont chacun formés par un gradin (8) et qui n'entrent pas en contact avec la chaussée, à partir desquels les flancs du pneumatique s'étendent radialement vers l'intérieur en direction des talons (2), et les bords de la ceinture (6) se trouvant en outre dans la région de l'élargissement (9), caractérisé en ce que les bords de la ceinture (6) dépassent latéralement des faces (10) des gradins (8), s'étendant perpendiculairement à l'axe du pneumatique, d'une première dimension (G_B − L_B)/2 qui est égale à environ 25 à 40% d'une deuxième dimension (B − L_B)/2, dimension dont les flancs bombés due pneumatique dépassant, en leur endroit le lus large (largeur B du pneumatique), de la face de gradin verticale (10).

2. Pneumatique pour véhicules selon la revendication 1, caractérisé en ce que la première dimension est égale à environ 0,3 fois la deuxième dimension.

3. Pneumatique pour véhicules selon la revendication 1, caractérisé en ce que les bords de la ceinture (6) présentent une zone (Z), s'étendant en angle vers la carcasse, qui est égale à environ deux fois la première dimension, dimension dont les bords de la ceinture dépassent latéralement de la face de gradin verticale (10).

4. Pneumatique pour véhicules selon la revendication 1, caractérisé en ce que la largeur de la face de roulement (L_B) est égale à environ 65 à 75% de la largeur du pneumatique (B).

**Claims**

1. Pneumatic vehicle tyre, having a substantially inextensible belt (6) between the tread strip (4) and the radial carcase (1) and having, on each side of the tread strip (4), shoulder-like, substantially cylindrical widened portions (9), which are each formed by a step (8) and do not come into contact with the roadway, the side walls of the tyre extending radially inwardly towards the tyre beads (2) from said widened portions and, furthermore, the edges of the belt (6) being situated in the region of the widened portion (9), characterised in that the edges of the belt (6) protrude laterally beyond the faces (10) of the step (8), which extend vertically relative to the tyre axis, by an amount corresponding to a first dimension

$$\frac{G_B - L_B}{2}$$

which is substantially 25 to 40% of the second dimension

$$\frac{B - L_B}{2}$$

the convex side walls of the tyre protruding beyond the vertical step face (10) by an amount corresponding to said second dimension at its widest pont, tyre width B.

2. Pneumatic vehicle tyre according to claim 1, characterised in that the first dimension is substantially 0.3 of the second dimension.

3. Pneumatic vehicle tyre according to claim 1, characterised in that the edges of the belt (6) have a zone (Z), which extends at an angle relative to the carcase and is substantially twice the size of the first dimension, by which the edges of the belt protrude laterally beyond the vertical lateral face (10).

4. Pneumatic vehicle tyre according to claim 1, characterised in that the tread surface width ($L_B$) is substantially 65 to 75% of the tyre width (B).